# EUROPEAN PATENT APPLICATION

(11) **EP 3 530 113 A1**
(43) Date of publication of application: **28.08.2019**
(21) Application number: 18803526.5
(22) Date of filing: 23.03.2018
(51) Int. Cl.: A01K 63/04, A01K 61/50, B01F 3/04, C02F 1/72

(54) **SHELLFISH PURIFICATION METHOD AND SHELLFISH PURIFICATION SYSTEM**

(30) Priority: 12.01.2018 JP 2018003536
(71) Applicant: Tosslec Co., Ltd., Kyoto-city, Kyoto 601-8303 (JP)
(72) Inventor: NAKAO, Junji, Kyoto-city, Kyoto 601-8303 (JP)
(74) Representative: Horn Kleimann Waitzhofer Patentanwälte PartG mbB
(86) International application number: PCT/JP2018/011768
(87) International publication number: WO 2019/138590

(57) **Abstract**

The depuration method for shellfish comprises preparing seawater that is purified by irradiation with ultraviolet rays and made to contain oxygen gas bubbles in a storage unit, maintaining while bringing the seawater into contact with the shellfish, and deriving the seawater from the storage unit, in which the bubbles have superfine bubbles with a diameter of less than 100 nm, and the superfine bubbles selectively adsorb and desorb viruses accumulated in the shellfish. The depuration system for shellfish comprises a purification unit for purifying seawater with ultraviolet rays, a superfine bubble generating unit for generating oxygen gas bubbles with a diameter of less than 100 nm in the seawater, and a storage unit for storing the seawater, that is connected to the purification unit for purifying seawater with ultraviolet rays and the superfine bubble generating unit, in which the storage unit retains shellfish.

## Description

### TECHNICAL FIELD

The present invention relates to a method for depurating shellfish and a depuration system for shellfish.

### BACKGROUND ART

Some fish and shellfish are cultivated as food. For example, in cultivation of oysters as food, oysters are harvested after being grown in the sea, and shipped to the market. In this cultivation step, before shipping to the market, mud and deposits adhered to the shells are removed by a washing machine, then the oysters are retained for a fixed time, and depurated.

Incidentally, in shellfish represented by oysters, food poisoning by virus is sometimes a problem. For example, norovirus is accumulated in the midgut glands of oysters in the process of growing, enters a human body, and causes food poisoning. In order to solve the problem of food poisoning, inactivation of virus is effective countermeasures. Thus, for the purpose of preventing food poisoning by shellfish, a great number of studies have been done for inactivation of virus.

As one of such studies, for example, Non-Patent Document 1 describes a method for inactivating by ultraviolet rays against norovirus causing food poisoning by eating raw shellfish such as oyster. According to this method, it has been confirmed that the number of viruses is reduced by submerging oysters incorporating virus in the midgut gland in a water bath, and circulating water irradiated with ultraviolet rays in the water bath, and the virus is inactivated.

In addition, as other study, use of disinfectant action of fine bubbles called microbubbles and ultrafine bubbles has been studied. For example, Non-Patent Document 2 describes that norovirus in the seawater can be inactivated by disinfection effect of microbubbles of ozone. This method directly applies ozone bubbles to virus, and inactivates virus by disinfectant actions of both ozone and microbubbles.

Further, Non-Patent Document 1 describes a method for cultivating oysters using ultrafine bubbles. In this method, it is also devised that norovirus is killed and inactivated by inactivation effects of both ozone and ultrafine bubbles, by washing oysters by the seawater containing ultrafine-bubbled ozone gas.

### PRIOR ART DOCUMENTS

### PATENT DOCUMENTS

Patent Document 1: JP 2012-96216 A

### NON-PATENT DOCUMENT

Non-Patent Document 1: Miwa FUKUTA, et al., "Poliovirus Uptake into and Excretion from Oysters: A Model Experiment for Elimination of Norwalk-like Viruses from Oysters", Public Health and Environment Research Division of Mie Prefectural, Science and Technology Promotion Center, National Institute of Public Health, Tokyo Metropolitan Research Laboratory of Public Health, Suzuka Junior College, February 20, 2003, The Journal of the Japanese Association for Infectious Diseases, 77(2): 95-102.
Non-Patent Document 2: Masayoshi TAKAHASHI, "Success in Inactivation of Norovirus", AIST Today, National Institute of Advanced Industrial Science and Technology, March 2004, 4(3): 18-20.

### DISCLOSURE OF THE INVENTION

### PROBLEMS TO BE SOLVED BY THE INVENTION

However, the depuration method of Non-Patent Document 1 circulates seawater in which oysters are submerged and kills viruses by ultraviolet rays in the middle of circulation against circulated seawater, thus all viruses entered inside the midgut gland of shellfish cannot be discharged to the seawater only by simply circulating the seawater, and ultraviolet rays do not reach inside the body of shellfish. Therefore, there has been a fundamental problem that virus accumulated in the body of shellfish cannot be inactivated.

Also, the disinfection methods described in Non-Patent Document 2 and Patent Document 1 inactivate virus with bubbles of ozone gas. However, when ozone is applied to live shellfish, there have been problems that the amount of seawater taken in oysters decreases and depuration does not proceed since the shellfish refuses suction of seawater, and the shellfish can be killed with virus when the concentration is high. These phenomena are not peculiar to ozone, but common problems to biocompatible water depuration methods of depurating seawater or fresh water by adding a disinfectant.

Furthermore, there has also been a study report that only disinfection effects of microbubbles and ultrafine bubbles are not sufficient for inactivation of virus.

The present invention is made in view of the problems described above, and an object of the present invention is to provide an effective depuration method or depuration system for shellfish using superfine bubbles.

### SOLUTIONS TO THE PROBLEMS

(1) The depuration method for shellfish according to the present invention comprises preparing seawater that is purified and made to contain oxygen gas bubbles in a storage unit, and bringing the seawater into contact with shellfish, wherein the bubbles have superfine bubbles with a diameter of less than 100 nm, and the superfine bubbles selectively adsorb and desorb viruses accumulated in the shellfish.
   According to this depuration method for shellfish, by submerging shellfish in purified seawater to act on the shellfish, bubbles with a diameter of less than 100 nm (hereinafter, referred to as "superfine bubbles") contained in seawater can enter the body of shellfish, especially cecum in the midgut gland, selectively adsorb and desorb viruses in the body of shellfish, and discharge the viruses to the outside of the body, that is, depurate the shellfish.
   Further, superfine bubbles are oxygen gas, thus activate shellfish taking in seawater incorporating superfine bubbles, and the shellfish increases the amount of seawater taken by the shellfish increases. This quickens circulation of seawater suctioned and discharged by the shellfish, and the shellfish can be efficiently depurated.
(2) In the depuration method for shellfish according to the present invention, bringing the seawater into contact with shellfish preferably includes retention at least for 18 hours. According to such depuration method for shellfish, viruses existing in the body of shellfish can be discharged to the outside of the body, in accordance with the conventional depuration method, and also by selective adsorption and desorption.
(3) In the depuration method for shellfish according to the present invention may further include, after purifying the seawater brought into contact with the shellfish, bringing the seawater into contact with the shellfish again. According to such depuration method for shellfish, it is possible to purify seawater containing viruses discharged from shellfish by selective adsorption and desorption, and act the seawater on shellfish again by circulating the seawater. Whereby, it is possible to prevent shellfish from absorbing viruses once discharged again.
(4) The depuration method for shellfish according to the present invention may further include releasing the seawater brought into contact with the shellfish to sea area by trickle flow. According to such depuration method for shellfish, it is possible to prevent shellfish from absorbing viruses discharged from shellfish again by selective adsorption and desorption, by acting the purified seawater on shellfish by trickle flow.
(5) In the depuration method for shellfish according to the present invention, discharging the seawater to sea area may include purifying the seawater before the discharge. According to such depuration method for shellfish, the seawater discharged to sea area is purified, thus environmental load is reduced.
(6) Further, the bubbles may be generated by irradiating the seawater with ultrasonic waves to be crushed. According to this depuration method for shellfish, seawater containing viruses discharged from the body of shellfish by selective adsorption and desorption is irradiated with ultraviolet waves, thereby generating superfine bubbles for selective adsorption and desorption, and also inactivating viruses by inactivation effect of ultrasonic waves. Therefore, it is possible to prevent the depurated shellfish from being infected with viruses again.
(7) Preparing seawater that is purified and made to contain oxygen gas bubbles in the storage unit may include purifying the seawater by irradiating the seawater with ultraviolet rays. According to this depuration method for shellfish, seawater enters the body of shellfish is certainly purified by ultraviolet rays in advance, thus it is possible to prevent the shellfish from being infected with viruses.
(8) Preparing seawater that is purified and made to contain oxygen gas bubbles in the storage unit may include purifying the seawater by adding a disinfectant into the seawater. According to this depuration method for shellfish, seawater enters the body of shellfish is certainly purified by ultraviolet rays in advance, thus it is possible to prevent the shellfish from being infected with viruses.
(9) The depuration system for shellfish according to the present invention includes a purification unit for purifying seawater with ultraviolet rays, a superfine bubble generating unit for generating oxygen gas bubbles with a diameter of less than 100 nm in the seawater, and a storage unit for storing the seawater, that is connected to the purification unit and the superfine bubble generating unit, wherein the storage unit retains shellfish.
   According to this depuration system for shellfish, seawater that is purified with ultraviolet rays and contains oxygen gas bubbles with a diameter of less than 100 nm is generated by the purification unit and the superfine bubble generating unit, and by submerging shellfish into the seawater, superfine bubbles contained in the seawater can enter the body of shellfish, especially cecum in the midgut gland, selectively adsorb and desorb viruses in the body of shellfish, and discharge the viruses to the outside of the body, that is, depurate the shellfish.
   Further, superfine bubbles are oxygen gas, thus activate shellfish taking in seawater incorporating superfine bubbles, and the shellfish increases the amount of seawater taken by the shellfish increases. This quickens circulation of seawater suctioned and discharged by the shellfish, and the shellfish can be efficiently depurated.
(10) The depuration system for shellfish according to the present invention includes a purification unit for purifying seawater with a disinfectant, a superfine bubble generating unit for generating oxygen gas bubbles with a diameter of less than 100 nm in the seawater, and a storage unit for storing the seawater, that is connected to the purification unit and the superfine bubble generating unit, wherein the storage unit retains shellfish.
   According to this depuration system for shellfish, seawater that is purified with a disinfectant and contains oxygen gas bubbles with a diameter of less than 100 nm is generated by the purification unit and the superfine bubble generating unit, and by submerging shellfish into the seawater, superfine bubbles contained in the seawater can enter the body of shellfish, especially cecum in the midgut gland, selectively adsorb and desorb viruses in the body of shellfish, and discharge the viruses to the outside of the body, that is, depurate the shellfish.
   Further, superfine bubbles are oxygen gas, thus activate shellfish taking in seawater incorporating superfine bubbles, and the shellfish increases the amount of seawater taken by the shellfish increases. This quickens circulation of seawater suctioned and discharged by the shellfish, and the shellfish can be efficiently depurated.
(11) In the depuration system for shellfish according to the present invention, further, the purification unit, the superfine bubble generating unit and the storage unit may be incorporated in a circulation path where the seawater circulates. According to such depuration system for shellfish, it is possible to purify seawater containing viruses discharged from shellfish and act the seawater on shellfish again, by circulating the purified seawater to act it on shellfish. Whereby, it is possible to prevent shellfish from absorbing viruses once depurated again.
(12) A purification unit for purifying water with a disinfectant, a superfine bubble generating unit for generating oxygen gas bubbles with a diameter of less than 100 nm in the water, and a storage unit for storing the water, that is connected to the purification unit and the superfine bubble generating unit, wherein the storage unit retains fish and shellfish.

According to this depuration system for fish and shellfish, seawater that is purified and contains oxygen gas bubbles with a diameter of less than 100 nm is generated by the purification unit and the superfine bubble generating unit, and by retaining fish and shellfish in the seawater, superfine bubbles contained in the seawater can enter the body of fish and shellfish, especially cecum in the midgut gland, selectively adsorb and desorb viruses in the body of fish and shellfish, and discharge the viruses to the outside of the body, that is, depurate the fish and shellfish.

Further, superfine bubbles are oxygen gas, thus activate fish and shellfish taking in seawater incorporating superfine bubbles, and the fish and shellfish increases the amount of seawater taken by the fish and shellfish increases. This quickens circulation of seawater suctioned and discharged by the fish and shellfish, and the fish and shellfish can be efficiently depurated.

### EFFECTS OF THE INVENTION

According to the present invention, it is possible to provide a depuration method or depuration system for effectively depurating shellfish using superfine bubbles.

### BRIEF DESCRIPTION OF THE DRAWINGS

Fig. 1 is a diagram showing a functional block of depuration system for shellfish according to an embodiment of the present invention.
Fig. 2 is a schematic view of the storage unit shown in Fig. 1.
Figs. 3(A) to 3(C) are views describing a relation between oyster and bubbles, Fig. 3(A) shows a schematic view of a state where a shell of an oyster is removed, Fig. 3(B) shows a schematic view of a relation with superfine bubbles in the midgut gland, and Fig. 3(C) shows a schematic view of a relation with microbubbles in the midgut gland.
Fig. 4 shows a schematic view of cecum in the midgut gland of an oyster.
Fig. 5 shows schematic diagrams showing relation between superfine bubbles and viruses for describing selective adsorption and desorption.
Figs. 6(A) and 6(B) are diagrams showing results of observing superfine bubbles using a PLL-mica substrate, Fig. 6(A) is an observation photograph, and Fig. 6(B) is a graph at the height of the white line.
Figs. 7(A) and 7(B) are diagrams showing results of observing superfine bubbles using a PLL-mica substrate, Fig. 7(A) is an observation photograph, and Fig. 7(B) is a graph at the height of the white line.
Figs. 8(A) and 8(B) are diagrams showing results of observing superfine bubbles using an APTES-mica substrate, Fig. 8(A) is an observation photograph, and Fig. 8(B) is a graph at the height of the white line.
Figs. 9(A) and 9(B) are diagrams showing results of observing superfine bubbles using an APTES-mica substrate, Fig. 9(A) is an observation photograph, and Fig. 9(B) is a graph at the height of the white line.
Figs. 10(A) and 10(B) are tables showing the results of purification test of seawater, Fig. 10(A) shows infectivity titers of each sample, and Fig. 10(B) shows infectivity titer log reduction value of each sample based on the results shown in Fig. 10(A).
Fig. 11 is a graph showing reduction of infectivity titers of each treatment based on the Figs. 10(A) and 10(B).
Figs. 12(A) and 12(B) are tables showing a virus intake test of oysters, Fig. 12(A) shows change in infectivity titers of seawater to act on the oysters, and Fig. 12(B) shows infectivity titers of the oysters incorporating virus.
Fig. 13 is a graph showing infectivity titers of the oysters incorporating virus based on the results shown in Figs. 12(A) and 12(B).
Fig. 14 is a table showing depuration tests of Pacific oysters.
Fig. 15 is a graph showing depuration results of Pacific oysters based on the results shown in Fig. 14.
Fig. 16 is a table showing depuration tests of rock oysters.
Fig. 17 is a graph showing depuration results of rock oysters based on the results shown in Fig. 16.
Figs. 18(A) and 18(B) are photographs comparing water surfaces of storage units in a case where UFB treatment is not performed and a case where UFB treatment is performed, in the storage units where oysters are retained, Fig. 18(A) shows the case where UFB treatment is not performed, and Fig. 18(B) shows the case where UFB treatment is performed.

### MODE FOR CARRYING OUT THE INVENTION

### [Embodiment of Depuration System for Shellfish]

The depuration system for shellfish according to an embodiment of the present invention will be described with reference to the drawings. Depuration system 10 depurates shellfish. In this embodiment, the case where oysters are applied as shellfish will be described.

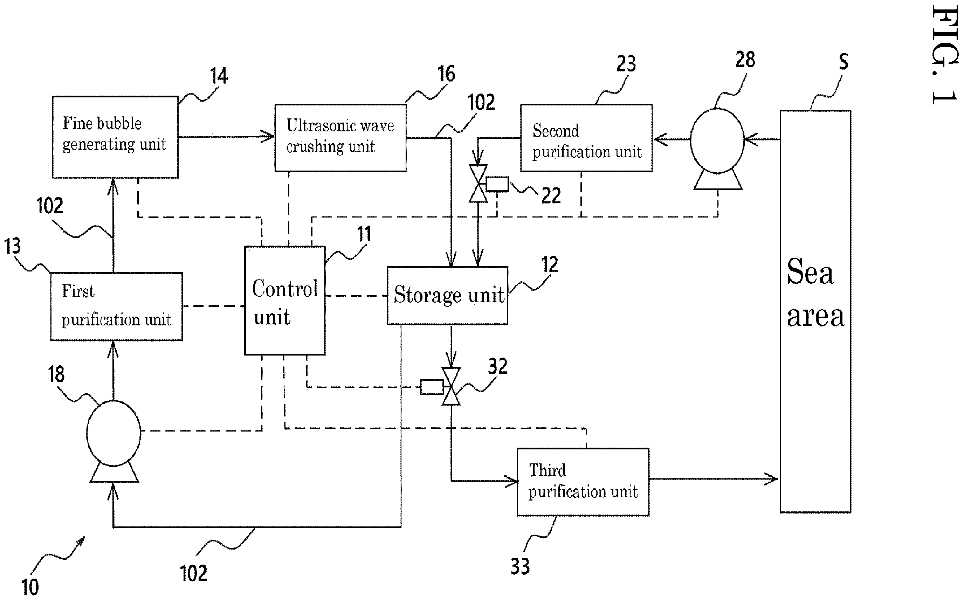

Fig. 1 shows a functional block diagram of the depuration system 10 for shellfish. The depuration system 10 includes a storage unit 12 for storing seawater and submerging oysters in the stored seawater, a first purification unit 13 for purifying seawater, a fine bubble generating unit 14 for generating oxygen gas fine bubbles in seawater, and an ultrasonic wave crushing unit 16 for crushing fine bubbles, and a first pump 18.

The first pump 18 is disposed between the storage unit 12 and the first purification unit 13, and supplies seawater from the storage unit 12 to the first purification unit 13. The storage unit 12, the first purification unit 13, the fine bubble generating unit 14, and the ultrasonic wave crushing unit 16 are connected to form a circulation path 102 for circulating seawater.

Also, the depuration system 10 includes a second pump 28 for pumping up seawater from sea area S, and a second purification unit 23 interposed between the second pump 28 and the storage unit 12 and purifies seawater pumped up to the storage unit 12. A valve 22 is provided between the storage unit 12 and the second purification unit 23, and can adjust an introduced amount of seawater to be introduced from the sea area S to the storage unit 12.

In addition, the depuration system 10 includes a third purification unit 33 that purifies seawater discharged from the storage unit 12 to the sea area S with ultraviolet rays. A valve 32 is provided between the storage unit 12 and the third purification unit 33, and can adjust a derived amount of seawater to be discharged from the storage unit 12 to the sea area S.

The storage unit 12, the first purification unit 13, the fine bubble generating unit 14, the ultrasonic wave crushing unit 16, the first pump 18, the second purification unit 23, the second pump 28, the third purification unit 33, and the valves 22 and 32 are managed by a control unit 11 centrally managing the depuration system 10. In Fig. 1, a connection between the control unit 11 and each unit managed by the control unit 11 is shown by broken line. The control unit 11 may control the depuration system 10 in cooperation with an external control device or the like. Also, each unit of the depuration system 10 may be controlled by other control device or the like.

The first purification unit 13 is interposed between the first pump 18 and the fine bubble generating unit 14, allows seawater to pass through from the first pump 18 to the fine bubble generating unit 14, and irradiates the passing seawater with ultraviolet rays to inactivate viruses. As conventionally well known, the first purification unit 13 is a UV irradiation device arranged with ultraviolet lamps along the interior of a pipe where liquid passes, which inactivates viruses with ultraviolet rays irradiated from the ultraviolet lamps and disinfects bacteria and the like to purify the seawater.

That is, the first purification unit 13 can purify the passing seawater. The first purification unit 13 can properly select those having inactivation performances depending on the flow rate of the passing seawater or the like. Also, the ultraviolet rays irradiated from the first purification unit 13 include deep ultraviolet rays of a wavelength of 200 nm to 350 nm.

The fine bubble generating unit 14 is provided on the downstream side of the first purification unit 13, and the seawater passed through the first purification unit 13 is introduced thereinto. The fine bubble generating unit 14 is, for example, a loop flow bubble-generating nozzle described in JP 2009-189984 A. With such loop flow bubble-generating nozzle, seawater pressurized by the pump 18 through the first purification unit 13 is supplied from a liquid supply hole to a loop flow type gas-liquid stirring and mixing chamber, and also oxygen gas is supplied from a gas introduction source (not shown) to the loop flow type gas-liquid stirring and mixing chamber through a gas inflow hole.

In the loop flow type gas-liquid stirring and mixing chamber, the seawater and the oxygen gas are mixed while generating turbulence along the periphery of the loop flow type gas-liquid stirring and mixing chamber, and a loop-like high speed circulation path flow is formed. Also, the oxygen gas flows from the gas inflow hole into the loop flow type gas-liquid stirring and mixing chamber through a fine path, thus becomes fine bubbles and mixes with the seawater.

Further, since an uneven shape is formed on the inner periphery in the loop flow type gas-liquid stirring and mixing chamber, the oxygen fine bubbles in the loop flow type gas-liquid stirring and mixing chamber can be made finer by collision of a gas-liquid mixture with the uneven shape by the high speed circulation path flow. In addition, such loop flow bubble-generating nozzle may form the loop-like high speed circulation path flow into a screw-like form by spirally forming the fine path that introduces the oxygen gas into the gas-liquid mixing chamber.

The fine bubble generating unit is not limited to a nozzle type, but also may be other configuration as long as fine bubbles to be crushed by the ultrasonic wave crushing unit 16 can be generated. For example, a conventionally well known swirling-type bubble generating device (refer to JP 2006-117365 A), pressure-shearing type bubble generating device (refer to JP 2006-272232 A), or the like can be used as a bubble generator 125. However, in a liquid containing many impurities like seawater, it is desirable to use a nozzle type fine bubble generating unit.

The ultrasonic wave crushing unit 16 is connected to the fine bubble generating unit 14, allows seawater containing fine bubbles to pass through the fine bubble generating unit 14, irradiates the passing seawater with ultrasonic waves to crush the passing seawater, and generates superfine bubbles. The ultrasonic wave crushing unit 16 can apply, for example, a bubble crushing unit described in JP 6123013 B2.

The ultrasonic wave crushing unit 16 according to the embodiment of the present invention forms an ultrasonic wave crushing field, crushes the fine bubbles contained in seawater to convert into superfine bubbles. Also, the ultrasonic wave crushing field is formed by being sequentially irradiated with ultrasonic waves, and ultraviolet rays are generated in the ultrasonic wave crushing field by so-called sonoluminescence phenomenon. Therefore, a purification effect to seawater passing the ultrasonic wave crushing field by ultraviolet rays is obtained.

Further, in the ultrasonic wave crushing unit 16, seawater is irradiated with ultrasonic waves forming the ultrasonic wave crushing field, whereby numerous vacuum bubbles are generated by cavitation in the liquid. When the vacuum bubbles are collapsed by repeating compression and expansion, an ultra high-temperature high-pressure reaction field is formed. In the reaction field, bacterial cell walls are broken by burst of the vacuum bubbles, and effects of inactivating viruses such as norovirus, in addition to general viable bacteria and legionella bacteria, Escherichia coli, and the like, and killing bacteria are obtained.

The first and second pumps are conventionally well known pumps for seawater and are excellent in corrosion resistant. Since the second and third purification units 23 and 33 have the same configurations as the first purification unit 13 that purifies seawater by irradiating the seawater with ultraviolet rays, description of specific configuration is omitted. Purification may include disinfection of bacteria and the like, other than inactivation of viruses.

The second purification unit 23 purifies seawater T pumped up from the sea area S and introduced into the storage unit 12 by ultraviolet rays. Therefore, the seawater derived from the sea area S to the storage unit 12 is irradiated with ultraviolet rays to kill viruses, thus purified seawater in which viruses are not present is supplied to the storage unit 12. Opening of the valve 22 is adjusted between the second purification unit 23 and the storage unit 12 as necessary to adjust the introduced amount of the seawater T. When seawater is not introduced, the valve 22 is put into a closed state.

The third purification unit 33 purifies the seawater T derived from the storage unit 12 and discharged to sea area by ultraviolet rays. Therefore, the discharged seawater is irradiated with ultraviolet rays to kill various germs and viruses, thus a load and adverse effects on the environments of the sea area S can be prevented. Opening of the valve 32 is adjusted between the third purification unit 33 and the storage unit 12 as necessary to adjust the derived amount of seawater. When seawater is not derived, the valve 32 is put into a closed state.

### [Storage Unit]

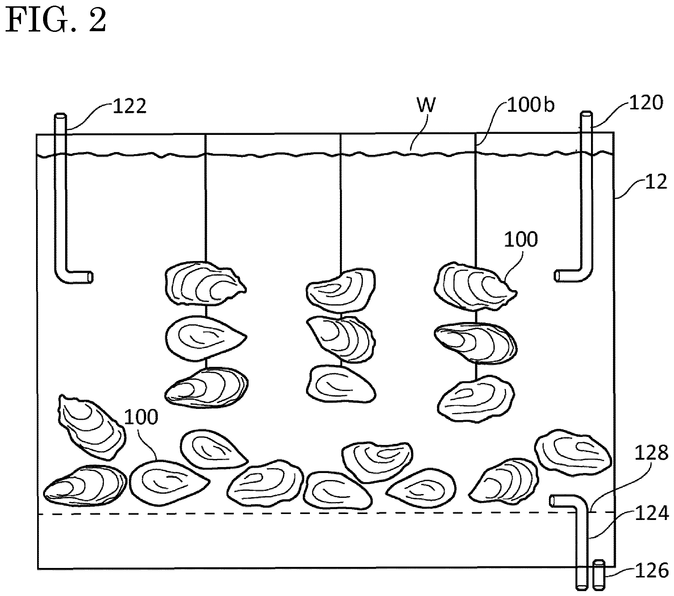

Fig. 2 shows a schematic view of the storage unit 12 shown in Fig. 1. The storage unit 12 is a container retaining the seawater T and oysters 100. The oysters 100 have been cultivated and sufficiently grown in the sea, and is before shipping to a market. The storage unit 12 may have any shape, and can have, for example, a hollow cylindrical shape. In this embodiment, the storage unit 12 is formed to a hollow rectangular parallelepiped shape (square pole).

In the storage unit 12, a seawater introduction pipe 120, a recursive introduction pipe 122, a recursive derivation pipe 124, and a seawater discharge pipe 126 are provided. The seawater introduction pipe 120 is connected to the sea area S through the second purification unit 23. The recursive introduction pipe 122 and the recursive derivation pipe 124 are contained in the circulation path 102. In the lower part of the inside of the storage unit 12, a net shelf 128 is horizontally arranged. The oysters 100 are arranged on the net shelf 128, and suspended in the seawater T by a string 100b. In this embodiment, a water tank like pool may be used as the storage unit 12.

The seawater introduction pipe 120 is connected to the second purification unit 23, and introduces the seawater T purified by ultraviolet rays into the storage unit 12. Also, the seawater introduction pipe 120 is bent in an L-shape in an end part arranged inside the storage unit 12, and horizontally ejects the seawater T. The seawater T horizontally receives discharge pressure, and is stirred. However, the seawater T does not vertically receive discharge pressure, thus does not prevent an increase in concentration of bubbles with small particle size in the lower part of the storage unit 12.

The recursive introduction pipe 122 is connected to the ultrasonic wave crushing unit 16, and introduces the seawater T containing superfine bubbles. The recursive introduction pipe 122 mainly consists of a cylindrical pipe and extends in the bottom part direction from the upper side of the storage unit 12. The end part of the recursive introduction pipe 122 inside the storage unit 12 is arranged at a 2/3 height position from the bottom part of the storage unit 12. The seawater T is kept at an amount in which the water surface is positioned at almost upper edge of the storage unit 12 in a steady state.

The bubbles contained in the seawater T tend to disperse to the lower part as they have a smaller particle diameter. Therefore, an UFB region in which the presence of ultrafine bubbles is dominant is formed in the bottom part of the storage unit 12, an UFB + MB region in which ultrafine bubbles and microbubbles coexist is formed on the upper side thereof, and an MB region in which the presence of microbubbles is dominant is formed on the upper side thereof. Also in the UFB region formed in the bottom part of the storage unit 12, the bubbles have smaller particle size as being nearer to the bottom part, and superfine bubbles are dominant near the bottom part where the oysters 100 arranged on the net shelf 128 are present.

Height and position of each region in the storage unit 12 fluctuate depending on the storage amount of the seawater T and the operation status of the fine bubble generating unit, the ultrasonic wave crushing unit, and the like. Herein, the "microbubble: MB" refers to a bubble with a particle size of 1 µm or more and less than 100 µm, and the "ultrafine bubble: UFB" herein refers to a bubble with a particle size of less than 1 µm (refer to ISO 20480-1, 2017). In addition, the superfine bubble refers to a bubble with a particle size of less than 100 nm, among UFB.

The recursive introduction pipe 122 is bent in an L-shape in an end part arranged inside the storage unit 12, and horizontally ejects the seawater T. Whereby, the seawater T containing superfine bubbles horizontally receives discharge pressure, and is stirred. However, the seawater T does not vertically receive discharge pressure, thus does not prevent an increase in concentration of bubbles with small particle size in the lower part of the storage unit 12.

The recursive derivation pipe 124 is connected to the fine bubble generating unit 14 through the first pump 18, and derives the seawater T to the fine bubble generating unit 14. The recursive derivation pipe 124 mainly consists of a cylindrical pipe and extends in the upper part direction from the bottom part of the storage unit 12. The end part of the recursive derivation pipe 124 inside the storage unit 12 is arranged at a 1/4 height position from the bottom part of the storage unit 12.

The recursive derivation pipe 124 derives the seawater T at a 1/4 height position from the bottom part of the storage unit 12 to the fine bubble generating unit 14 through the first pump 18. The recursive derivation pipe 124 is bent in an L-shape in an end part arranged inside the storage unit 12, and horizontally sucks the seawater T. Whereby, the seawater T containing superfine bubbles horizontally receives suction pressure, and is stirred in the storage unit 12. However, the seawater T does not vertically receive suction pressure, thus does not prevent an increase in concentration of bubbles with small particle size in the lower part of the storage unit 12.

The seawater discharge pipe 126 functions as a bottom valve, is connected to the third purification unit 33 through the valve 32, and derives the seawater T to the third purification unit 33. The seawater discharge pipe 126 mainly consists of a cylindrical pipe and extends to the bottom surface of the storage unit 12 from the bottom part of the storage unit 12, and can take out the seawater T together with excreta of the oysters 100 and the like from the bottom of the storage unit 12, and supply the seawater T from the bottom of the storage unit 12.

The net shelf 128 has a mesh size smaller than the oysters 100. Since the excreta of the oysters 100 drop under the net shelf 128, it is possible to prevent the oysters 100 from re-sucking the excreta. In the embodiment of the present invention, the oysters 100 are arranged on the net shelf 128 and retained, and also suspended in the seawater T by the string 100b and retained. However, when the oysters 100 can be submerged in the seawater T stored in the storage unit 12, the oysters 100 may only be arranged on the net shelf 128, may only be suspended in the seawater T by the string 100b, or may be submerged in the seawater T stored in the storage unit 12 and retained by other method.

### [Circulation Path]

In the depuration system 10 for shellfish according to this embodiment, the storage unit 12, the first purification unit 13, the fine bubble generating unit 14, and the ultrasonic wave crushing unit 16 and the first pump 18 are incorporated in the circulation path 102, seawater derived from the storage unit 12 through the recursive derivation pipe 124 is pressurized by the first pump 18, and circulates so as to pass through the first purification unit 13 to be introduced into the fine bubble generating unit 14, pass through the ultrasonic wave crushing unit 16, and return to the storage unit 12 through the recursive introduction pipe 122.

The fine bubble generating unit 14 and the ultrasonic wave crushing unit 16 function as a superfine bubble generating unit. However, the superfine bubble generating unit may be other configuration as long as it is possible to generate superfine bubbles with a particle size of less than 100 nm. The superfine bubble generating unit may be one that generates superfine bubbles by vibrating and crushing, for example, a nano bubble generator described in JP 2011-20005 A, or a swirling-type fine bubble generating device, and is incorporated in the circulation path 102.

The circulation path 102 is formed so that the seawater T introduced from the sea area S into the storage unit 12 through the second pump 28, the second purification unit 23 and the valve 22 returns again to the storage unit 12 through the fine bubble generating unit 14 and the ultrasonic wave crushing unit 16. Whereby, since the seawater T containing superfine bubbles returns again, it is possible to maintain a high content of superfine bubbles in the seawater retained in the storage unit 12 as compared to the case of newly introducing all seawater from the sea area S.

In the depuration system 10, the seawater purified through the second purification unit from the sea area S is introduced into the storage unit 12, and in the state where a predetermined amount of seawater is stored, superfine bubbles are generated by the superfine bubble generating unit while circulating the stored seawater by the circulation path 102. Whereby, it is possible to prepare seawater that is purified and made to contain oxygen gas bubbles in the storage unit.

The prepared seawater continues to circulate through the circulation path 102 while being brought into contact with shellfish retained in the storage unit. Herein, when the predetermined amount of seawater is stored in the storage unit 12, introduction of seawater from the sea area S is stopped. Therefore, the seawater stored in the storage unit 12 circulates while continuing to be purified in the first purification unit to depurate the shellfish.

Also, the prepared seawater may continue introduction of seawater from the sea area S when the predetermined amount of seawater is stored in the storage unit 12 while being brought into contact with shellfish retained in the storage unit. Whereby, the shellfish can be depurated by so-called trickle flow. At this time, the seawater may continue to circulate through the circulation path 102.

In the depuration system 10, the superfine bubble generating unit generating superfine bubbles and the second purification unit 23 purifying the seawater from the sea area S are provided on the different paths. However, the superfine bubble generating unit may also be provided either between the second purification unit 23 and the storage unit 12, or between the second purification unit 23 and the sea area S. In that case, the circulation path 102 may not be provided. That is, the superfine bubble generating unit and the purification unit may be provided in series on the same paths, and seawater that is purified and made to contain oxygen gas bubbles in a storage unit may be prepared.

The seawater produced by the depuration system according to this embodiment contains microbubbles, ultrafine superfine bubbles and superfine bubbles. The superfine bubbles remain in the seawater over a long period of time of several months. Therefore, the seawater produced by the depuration system according to this embodiment can suppress proliferation of bacteria by the remaining superfine bubbles, and obtain a depuration effect over a long period of time.

### [Example of Depuration Method for Shellfish]

Next, the depuration method for shellfish according to the embodiment of the present invention will be described. In this depuration method, depuration of shellfish is performed using the depuration system 10. However, the depuration system used in this depuration method for shellfish may be other configuration as long as it is possible to generate superfine bubbles in seawater, act them on shellfish, and selectively adsorb and desorb viruses.

In the depuration method for shellfish according to the embodiment of the present invention, the oysters 100 are retained in the seawater T retained in the storage unit 12 of the depuration system 10. The seawater T contains oxygen gas superfine bubbles by operations of the fine bubble generating unit 14 and the ultrasonic wave crushing unit 16 of the depuration system 10, and the superfine bubbles are bubbles with a diameter of less than 100 nm. Particularly, the superfine bubbles preferably have a diameter of about 20 nm to 70 nm.

In the depuration method according to the present invention, first, the seawater T is prepared in the storage unit. Specifically, the second pump 28 is operated, and the seawater T of sea area is introduced into the storage unit 12 through the second purification unit 23. At that time, various germs and viruses in the seawater pumped up from the sea area are killed, by the operation of the second purification unit 23.

Next, shellfish is submerged in the seawater T stored in the storage unit 12. Specifically, the oysters 100 are submerged in the storage unit 12 storing the seawater T from the open upper side. However, the oysters 100 may be previously prepared in the storage unit 12, followed by supplying seawater, whereby the oysters 100 are submerged in the seawater T.

Subsequently, oxygen gas bubbles are contained in the seawater T stored in the storage unit 12. Specifically, the seawater T stored in the storage unit 12 is supplied to the fine bubble generating unit 14 by the operation of the first pump 18, the seawater T in which oxygen gas fine bubbles are generated is supplied to the ultrasonic wave crushing unit 16, and the seawater T in which the fine bubbles are converted to superfine bubbles in the ultrasonic wave crushing unit 16 returns again to the storage unit 12.

Therefore, the seawater stored in the storage unit 12 via the circulation path 102 contains oxygen gas bubbles with a particle size of less than 100 nm. Whereby, seawater that is purified by being irradiated with ultraviolet rays and made to contain oxygen gas bubbles can be prepared in the storage unit.

The oysters 100 to be depurated by the depuration method for shellfish according to the present invention are those cultivated and grown in the sea. Therefore, the depuration method for shellfish according to the present invention is also referred to as "harvesting breeding depuration method". After removing stain adhered to shells during cultivation in the sea and deposits such as small shellfish and the like, the oysters 100 are retained in the seawater T of the storage unit 12 by being suspended by the string 100b, or arranged on the net shelf 128.

In the depuration method for shellfish according to the embodiment of the present invention, the oysters 100 are retained in the seawater T for 18 hours or more, in accordance with the depuration method for oysters guided by local governments. Whereby, the oysters 100 can be maintained in the storage unit 12 while seawater is brought into contact with the shellfish.

In addition, while the oysters 100 are retained in the storage unit 12 to act on the seawater, the seawater is derived from the storage unit 12, and the seawater is circulated by the circulation path 102, whereby the seawater derived from the storage unit 12 can be purified and returned again to the storage unit.

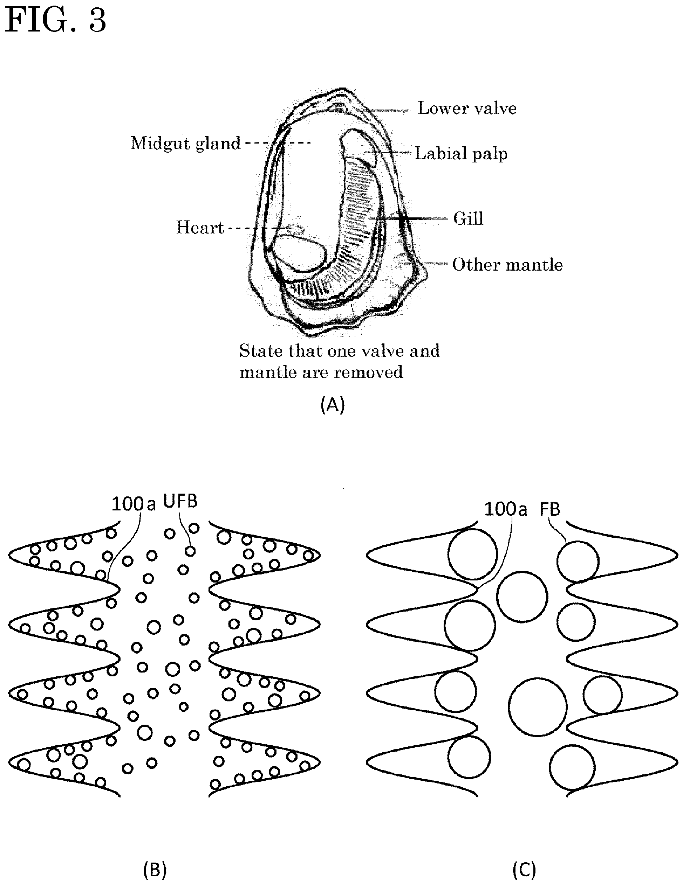

Figs. 3(A) to 3(C) are views describing a depuration action by bubbles, Fig. 3(A) shows a state where a shell of an oyster is removed, Fig. 3(B) shows a schematic view of superfine bubbles in the midgut gland, and Fig. 3(C) shows a schematic view of microbubbles in the midgut gland. The oysters 100 sometimes accumulate viruses such as norovirus in the body. For example, norovirus causing food poisoning is accumulated in the midgut gland in the position shown in Fig. 3(A), in the body of the oysters 100. Therefore, the oysters 100 are washed and depurated, after grown by cultivation, and before shipping to a market.

As shown in Fig. 3(B), superfine bubbles have a very small particle size, thus reach every corner inside the midgut gland 100a. Superfine bubbles 34 reaching intestinal digestive wall inside the midgut gland have a negative charge, can selectively adsorb viruses having characteristics of bipolar electrolyte and desorb the viruses from the body, and discharge the viruses to the outside of the body. That is, the oysters 100 can be depurated.

On the other hand, as shown in Fig. 3(C), microbubbles do not reach every corner inside the midgut gland 100a. Also, even UFB, those with a diameter of 100 nm or more are adsorbed to a hairy portion of the gill of oyster, thus it is not easy for them to reach the midgut gland. Therefore, microbubbles and UFB with a diameter of 100 nm or more cannot sufficiently adsorb viruses.

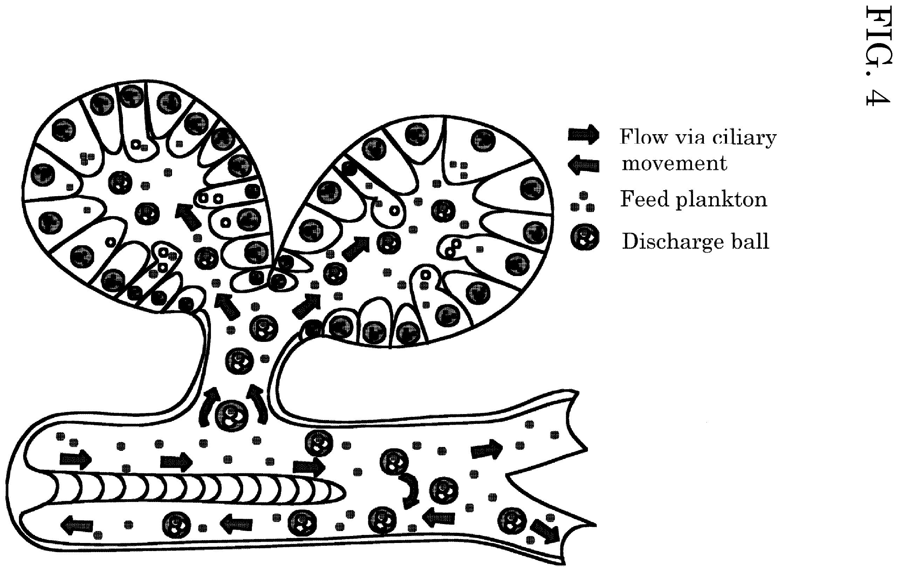

Further, digestive cecum in the midgut gland will be described using Fig. 4. Fig. 4 shows a flow of feed in the digestive cecum of the end part of the midgut gland. The digestive cecum is like an end blocked blind tube, and feed plankton intruded into the digestive cecum and absorbed into the oyster. At that time, viruses in the sea are also absorbed and accumulated in the digestive cecum.

While particles with large particle size cannot enter the blind tubular digestive cecum, superfine bubbles with a particle size of less than 100 nm can easily intrude into the digestive cecum, and can adsorb and desorb accumulated viruses and depurate the viruses. However, the superfine bubbles intruded into the digestive cecum themselves do not have a sufficient inactivation effect on the viruses, but only adsorb the viruses and desorb them from the midgut gland.

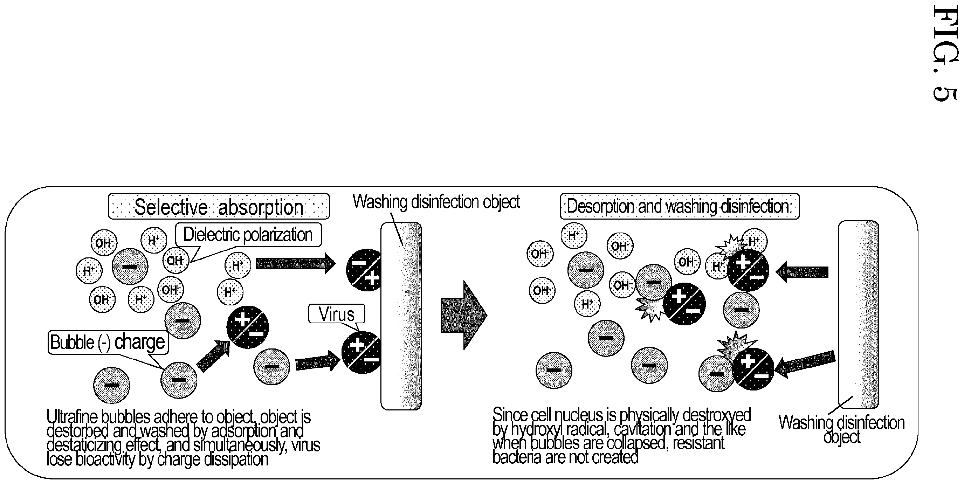

As to the principle of adsorption and desorption of viruses, as shown in Fig. 5, the surface of viruses has characteristics of bipolar electrolyte, negatively charged superfine bubbles adsorb on a functional group of the viruses, and concentration into the bubble surface proceeds so that the washing object (the digestive cecum in the midgut gland) is desorbed and washed.

Also, superfine bubbles controlled in particle size and concentration pass through a gill of oyster and are taken in the midgut gland. The seawater intake amount can be increased due to improvement in bioactivity of oyster by about 20% or more than usual, by oxygen superfine bubbles with a particle size of less than 100 nm, and this accelerates depuration effect from the midgut gland. These principles are collectively referred to as a selective adsorption and desorption depuration technique, and adsorption on viruses and desorption of the viruses by superfine bubbles is referred to as selective adsorption and desorption. Utilization of this technique has no pH-dependent purification and inactivation effects.

By this selective adsorption and desorption depuration technique, in the depuration system 10 and depuration method for shellfish according to the embodiment of the present invention, superfine bubbles selectively adsorb and desorb viruses accumulated in the body of shellfish and discharge, that is, depurate the viruses from the body of shellfish. Then, the discharged viruses are killed in the first or third purification unit 13 or 33.

In conventional chemical inactivation by hypochlorous acid or the like, while various germs and viruses can be killed by mixing chemicals or the like with seawater, they also have had adverse effects on shellfish at the same time. However, physical inactivation by ultraviolet rays like the depuration system 10 for shellfish according to the embodiment of the present invention does not affect on shellfish.

On the other hand, in conventional inactivation by ultraviolet rays, viruses in the midgut gland could not be inactivated. However, since the depuration system 10 for shellfish according to the embodiment of the present invention depurates viruses from oyster by selective adsorption and desorption by superfine bubbles and irradiates viruses discharged from the oyster with ultraviolet rays, the viruses accumulated in the body of oyster can be inactivated.

### [Observation Result of Superfine Bubbles]

Next, a result of observing superfine bubbles generated by the ultrasonic wave crushing unit according to the embodiment of the present invention will be described. For the observation of superfine bubbles, a high-speed atomic force microscope (high speed AFM) was used.

Observation conditions are as follows.
Device: high-speed atomic force microscope NanoExplorer
Observation environment: room temperature (21°C)
Cantilever: BL-AC10DS-A2 (Olympus, Japan)
Resolution: 200 × 200 pixels
Observation image: in-liquid AC mode shape image

UFB is generally known to have negative charge, and observed using a substrate having positive charge (PLL-mica substrate and APTES-mica substrate).

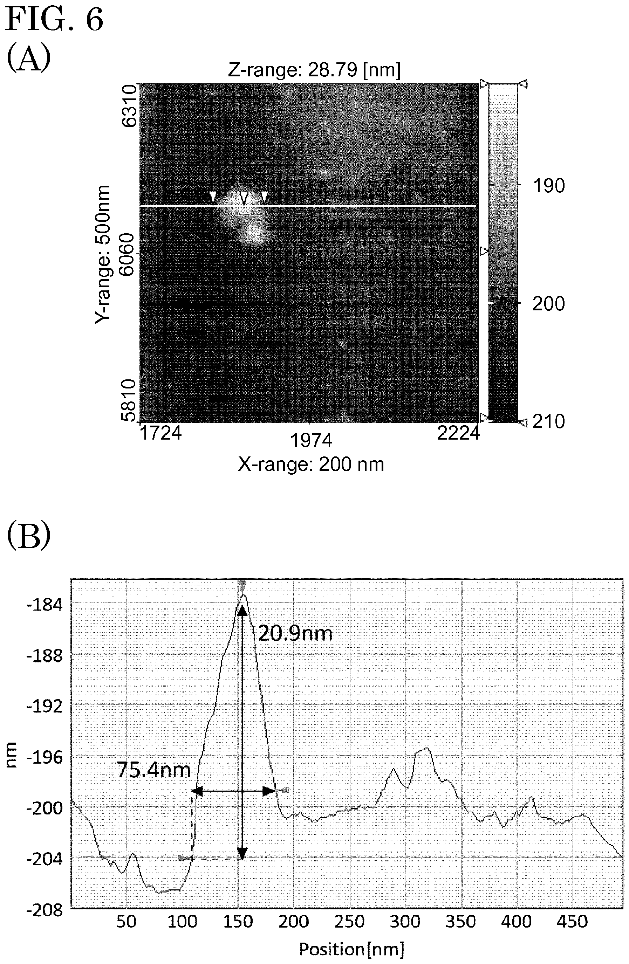

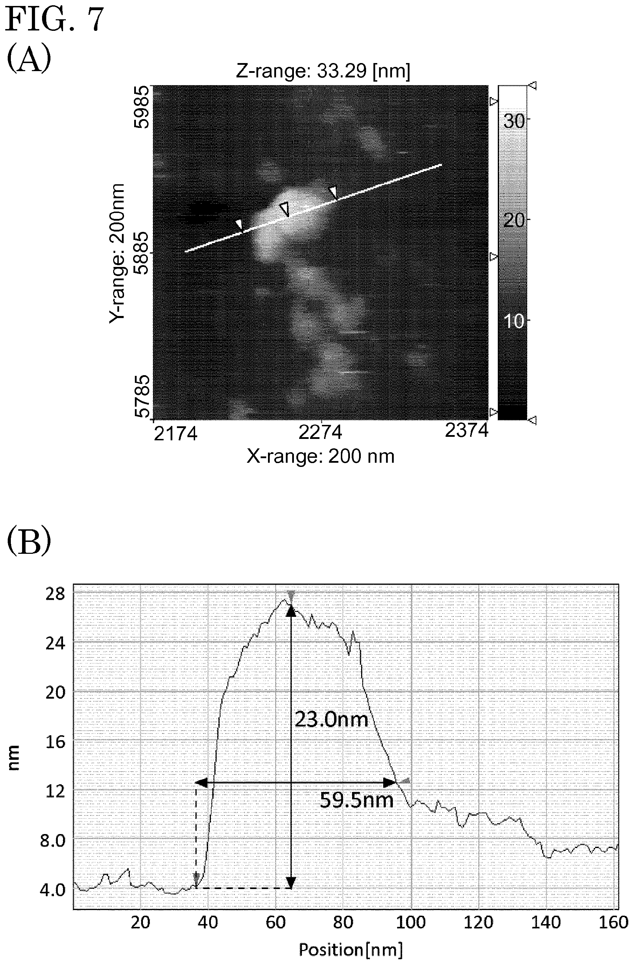

Figs. 6 and 7 show an observation result of superfine bubbles observed using a PLL-mica substrate, and each of Figs. 6(A) and 7(A) shows an observation photograph, and each of Figs. 6(B) and 7(B) shows a graph at the height of the white line. Positions of triangle marks on the white line shown in each of Figs. 6(A) and 7(A) correspond to positions of triangle marks on the graph in each of Figs. 6(B) and 7(B). Here, PLL (Poly-L-Lysine) is lysine polymer that is an amino acid. Lysine has an amino acid, and has positive charge. Therefore, the surface of the mica can be imparted with positive charge, by covering negatively charged mica with PLL.

Fig. 6(A) shows an observation photograph with a scanning range of 500 nm, and Fig. 7(A) shows an observation photograph with a scanning range of 200 nm. According to Fig. 6(B), Fig. 6(A) shows that a particle with a height of 20.9 nm and a length in the white line direction of 75.4 nm was observed, and according to Fig. 7(B), Fig. 7(A) shows that a particle with a height of 23.0 nm and a length in the white line direction of 59.5 nm was observed. In this observation using the PLL-mica substrate, the height of particle is considered as particle size, and overall, about one particle with a particle size of about 20 nm was observed in a range of 500 nm × 500 nm.

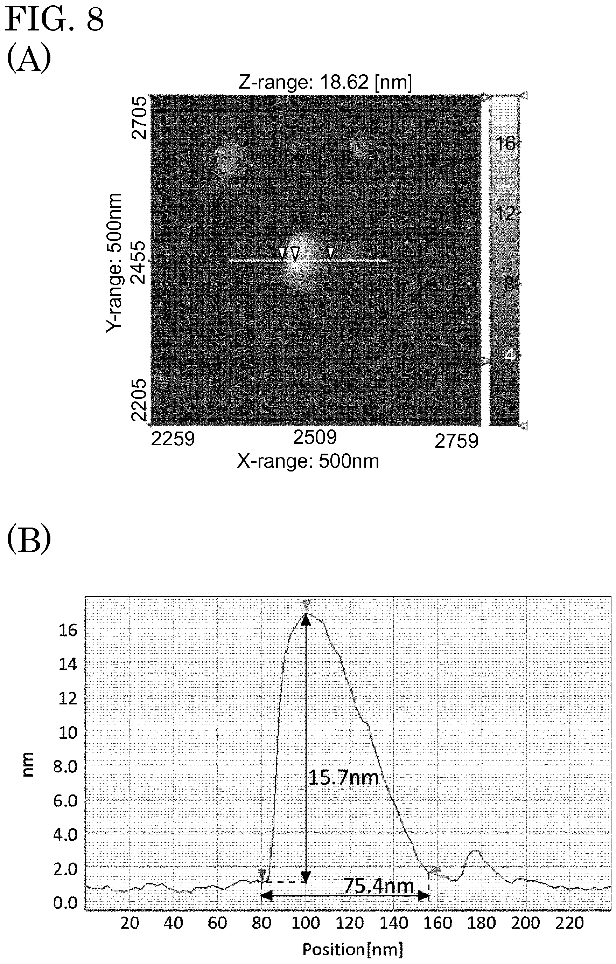

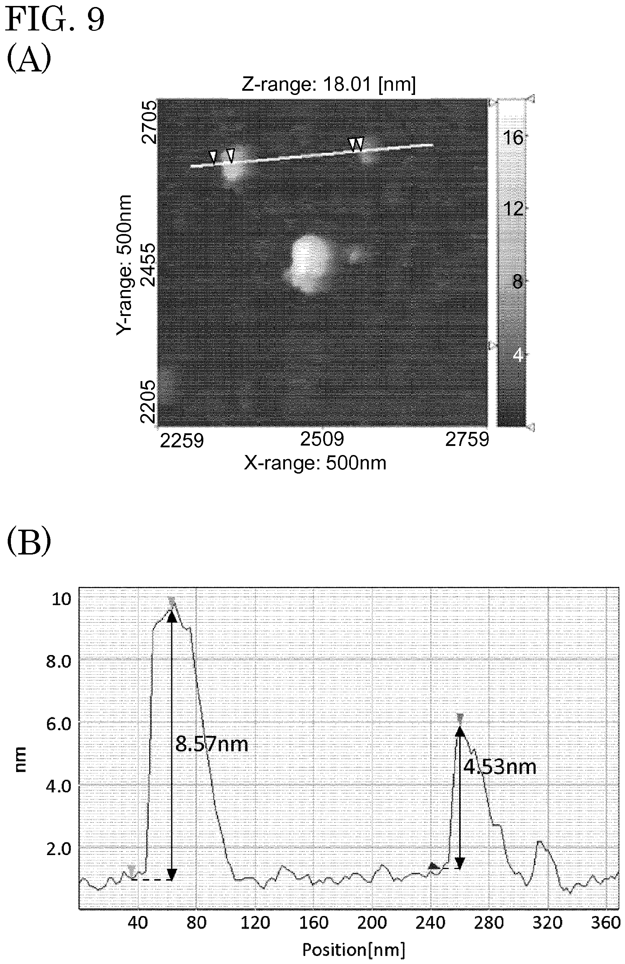

Figs. 8 and 9 show an observation result of superfine bubbles observed using an APTES-mica substrate, and each of Figs. 8(A) and 9(A) shows an observation photograph, and each of Figs. 8(B) and 9(B) shows a graph at the height of the white line. Positions of triangle marks on the white line shown in each of Figs. 8(A) and 9(A) correspond to positions of triangle marks on the graph in each of Figs. 8(B) and 9(B). Here, APTES (3-aminopropyl triethoxy silane) exposes an amino acid to the substrate surface by bonding between the ethoxy group and a hydroxyl group on the mica. Whereby, the surface of the mica can be imparted with positive charge.

Fig. 8(A) and Fig. 9(A) each show an observation photograph with a scanning range of 500 nm. According to Fig. 8(B), Fig. 8(A) shows that a particle with a height of 15.7 nm and a length in the white line direction of 75.4 nm was observed, and according to Fig. 9(B), Fig. 9(A) shows that a particle with a height of 8.57 nm and a length in the white line direction of 4.53 nm was observed. In this observation using the APTES-mica substrate, the height of particle is considered as particle size, and overall, a plurality of particles with a particle size of 20 nm or less were observed in a range of 500 nm × 500 nm.

Based on the above observation results, particles with a particle size of several nanometers to several tens of nanometers were observed. UFB has been observed in the positive charged substrate similar to these substrates, also in the past. Therefore, the observed particles are considered as UFB, and it can be seen that UFB at least in nanometer order is generated in seawater in the depuration system according to the embodiment of the present invention.

### [Virus Inactivation Test]

Next, a result of virus inactivation test will be shown. In the virus inactivation test, first, a virus solution was added to seawater as seawater purification test, then superfine bubbles were contained in the seawater, or the seawater was irradiated with ultraviolet rays, whereby weak inactivation ability of superfine bubbles and strong inactivation ability of ultraviolet rays were confirmed.

Subsequently, as a virus intake test, oysters were added into the seawater added with the virus solution, and when whether the virus would be taken in the oysters was verified, it was confirmed that the virus is taken in the oysters. Furthermore, as a depuration test of oysters, it was confirmed that, by containing superfine bubbles in the seawater using oysters incorporating the virus, the virus taken in the oysters is selectively adsorbed and desorbed by the superfine bubbles, and discharged from the midgut gland of the oysters.

Regarding the virus inactivation test, feline calicivirus was applied as virus, and infectivity titer of the virus was determined by plaque technique. Determination of the infectivity titer of the virus was performed in Kitasato Research Center for Environmental Science.

In the following test, UFB treatment refers to that, using the depuration system 10, seawater is circulated in the circulation path 102, superfine bubbles are generated by the superfine bubble generating unit, and the seawater containing superfine bubbles is acted on a test subject for 20 hours. Also, UV treatment refers to that, using the depuration system 10, seawater is inactivated by the first purification unit 13 of the circulation path 102, and the seawater is acted on a test subject for 20 hours.

Also, in the present description, for convenience of notation, "^" and "E" were used for notation of exponentiation. For example, the square of 10 is written as "10^2" or "1.0 E + 0.2".

### [Purification Test of Seawater]

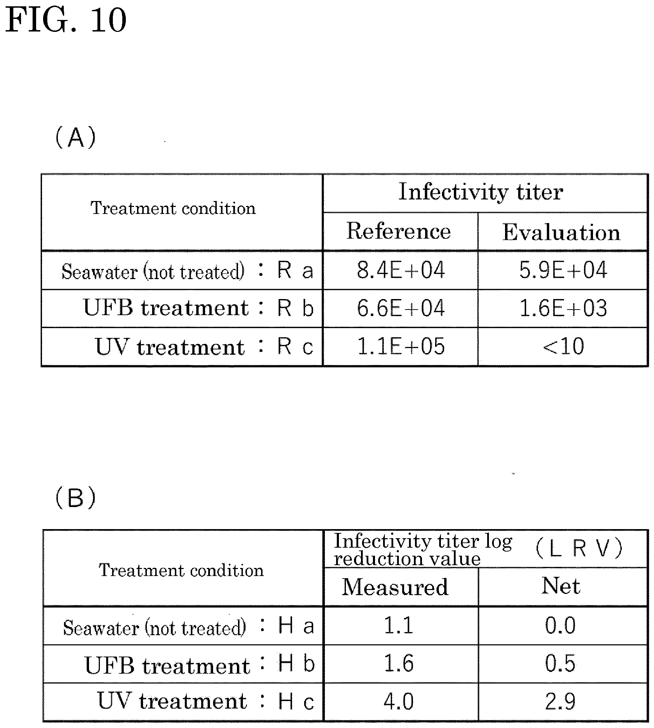

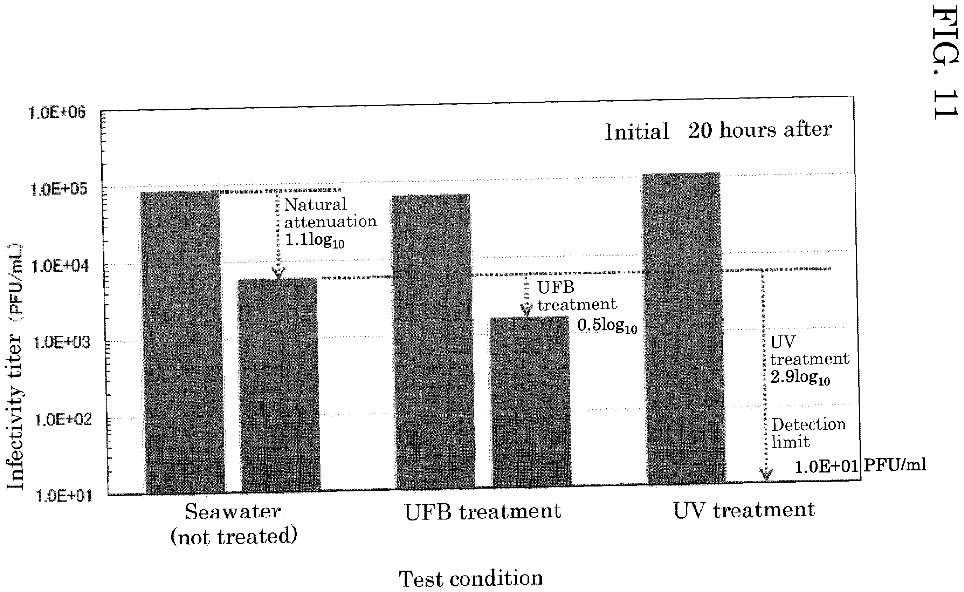

As a premise for performing a depuration test of oyster, an inactivation test was performed on seawater to submerge the oyster. The results of purification test of seawater are shown in Fig. 10 and Fig. 11. Fig. 10(A) shows infectivity titers of seawater, and Fig. 10(B) shows reduction of infectivity titer in a logarithm (Logio) based on the results of Fig. 10(A). Also, Fig. 11 shows an infectivity titer (PFU/mL) on the vertical axis, and samples before and after each treatment on the horizontal axis.

In the purification test of seawater, first, using the depuration system 10, a predetermined amount (for example, 600 L) of seawater was stored in the storage unit 12, and a predetermined amount of a virus solution (750 mL) was added to the seawater to prepare three reference samples Ra, Rb, and Rc. The infectivity titer of each reference sample was Ra: 8.4 × 10^4 (PFU/mL), Rb: 6.6 × 10^4 (PFU/mL), and Rc: 1.1 × 10^5 (PFU/mL), as shown in Fig. 10(A). The infectivity titer of the virus solution added to the storage unit 12 was 4.0 × 10^8 (PFU/mL).

Next, reference sample Ra was left (not treated) for 20 hours, and used as evaluation sample Ha. Also, reference sample Rb was subjected to UFB treatment, and used as evaluation sample Hb. Further, reference sample Rc was subjected to UV treatment, and used as evaluation sample Hc. The infectivity titer of each evaluation sample was Ra: 5.9 × 10^3 (PFU/mL), Rb: 1.6 × 10^3 (PFU/mL), and Rc: 10 (PFU/mL), as shown in Fig. 10(A).

In the infectivity titer log reduction value (LRV), as shown in Fig. 10(B), the actually measured reduction without treatment was 1.1, based on comparison between reference samples R and evaluation samples H (Log₁₀ [Infectivity titer of R/Infectivity titer of H]). This is due to natural attenuation. That is, as conventionally known, in seawater, the infectivity titer is attenuated by natural attenuation even when no treatment is performed.

Also, the actually determined infectivity titer log reduction value of UFB treatment was 1.6. The infectivity titer has been attenuated by inactivation effect of superfine bubbles and natural attenuation. Further, the actually determined infectivity titer log reduction value of UV treatment was 4.0. The infectivity titer has been attenuated by inactivation effect of ultraviolet rays and natural attenuation.

Furthermore, in the actually determined infectivity titer log reduction value of each sample, as "net infectivity titer log reduction value" subtracting the infectivity titer log reduction value by natural attenuation (actually measured reduction value without treatment was 1.1), the net infectivity titer log reduction value without treatment was 0, the net infectivity titer log reduction value of UFB treatment was 0.5, and the net infectivity titer log reduction value of UV treatment was 2.9.

Fig. 11 shows infectivity titers without treatment, before and after UFB treatment or UV treatment, based on the values of Fig. 10. Based on these results, a slight inactivation effect was confirmed in UFB treatment, that is, superfine bubbles, and a large inactivation effect was confirmed in UV treatment, that is, ultraviolet ray.

### [Virus Intake Test of Oyster]

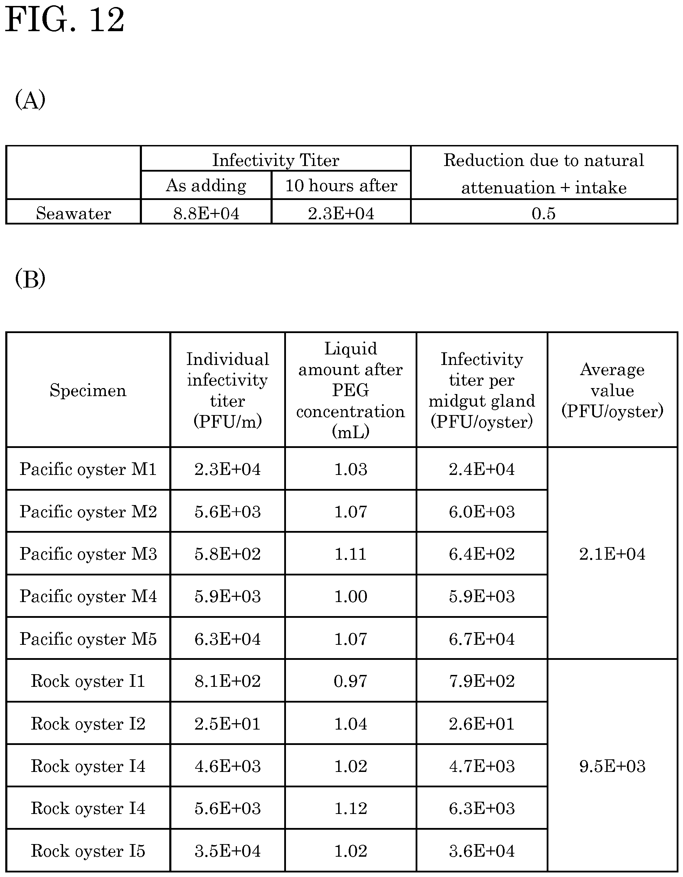

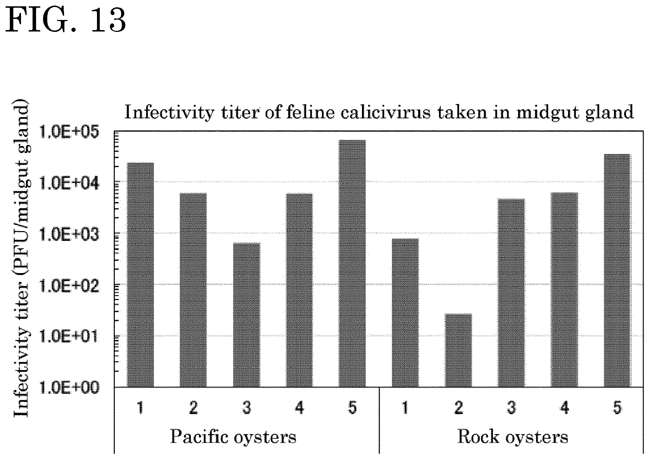

Next, as a premise for performing a depuration test of oysters, a virus intake test of oysters was performed. The results of virus intake test of oysters are shown in Figs. 12(A) to 12(B) and Fig. 13. Fig. 12(A) shows infectivity titers of seawater to act on the oysters, and Fig. 12(B) shows infectivity titers of the oysters incorporating virus. Also, Fig. 13 shows infectivity titer (PFU/mL) on the vertical axis, and samples of Pacific oysters or rock oysters on the horizontal axis. In the determination of infectivity titer, samples of the midgut glands taken out from the oysters were concentrated and prepared by PEG precipitation method, and used for the determination of infectivity titer.

In the virus intake test of oysters, first, using the depuration system 10, a predetermined amount (for example, 600 L) of seawater was stored in the storage unit 12, and a predetermined amount of a virus solution (750 mL) was added to the seawater and stirred to prepare test seawater T1. The infectivity titer of the test seawater T1 was 8.8 × 10^4 (PFU/mL), as shown in Fig. 12(A). The virus solution was prepared in the same manner as that in the purification test of seawater.

Next, a total of ten oysters of five Pacific oysters M1, M2, M3, M4 and M5 and rock oysters I1, I2, I3, I4 and I5 were submerged in the test seawater T1 for 10 hours to act the test seawater T1 on the oysters and incorporate viruses. The infectivity titer of the test seawater T1 at 10 hours after submerging the oysters was 2.4 × 10^4 (PFU/mL). The reduction of the infectivity titer is reduction due to natural attenuation and intake into the oysters. Therefore, based on comparison between the infectivity titers at adding oysters and 10 hours after adding oysters (Log₁₀ [Infectivity titer at adding oysters /Infectivity titer at 10 hours after adding oysters]), the infectivity titer log reduction value of the test seawater T1 by natural attenuation and intake was 0.5.

Subsequently, the midgut glands were taken out from the Pacific oysters M1, M2, M3, M4 and M5 and rock oysters I1, I2, I3, I4 and I5 after submerged in the test seawater T1 for 10 hours, and viruses were collected. The prepared midgut gland samples were concentrated and prepared by PEG precipitation, and the infectivity titer was determined by plaque technique. The infectivity titer (infectivity titer after concentration after PEG precipitation) of viruses taken in the oysters are shown in Fig. 12(B) and Fig. 13.

In the virus intake test of oysters, while the extent of infection is different by oysters, in average, the infectivity titer of the Pacific oysters was 2.1 × 10^4 (PFU/mL), and the infectivity titer of the rock oysters was 0.5 × 10^3 (PFU/mL). Based on this result, it was confirmed that viruses are taken in the midgut glands of oysters by submerging the oysters in the seawater added with the virus solution for 10 hours.

### [Depuration Test of Oysters]

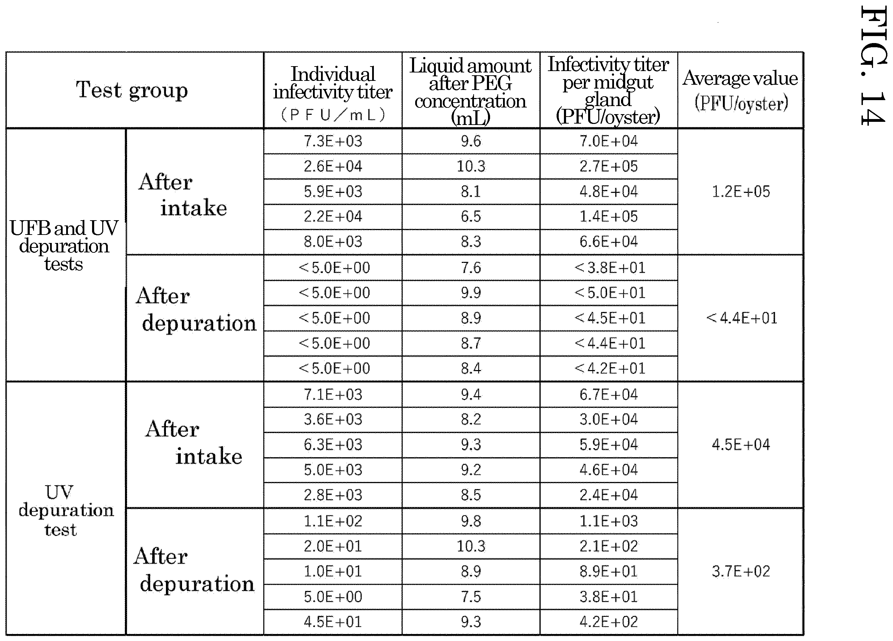

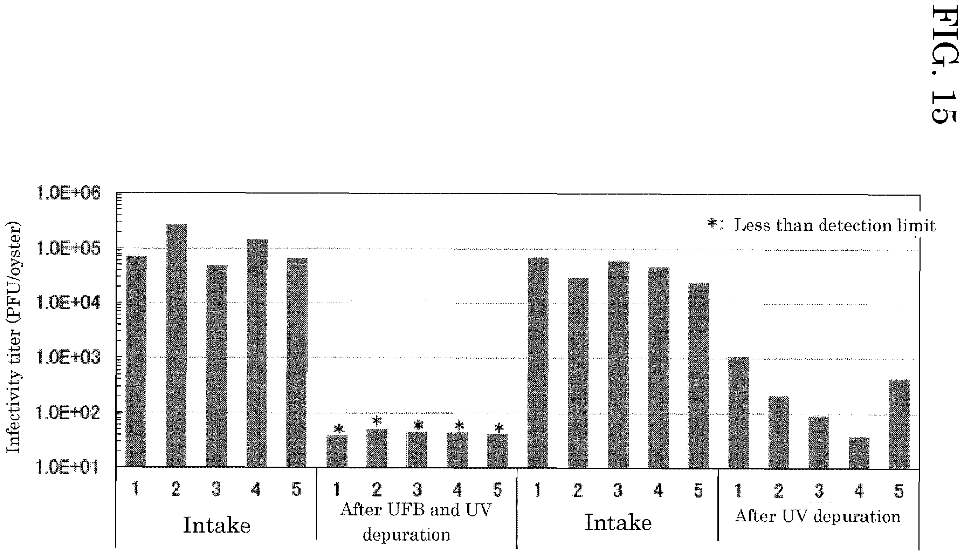

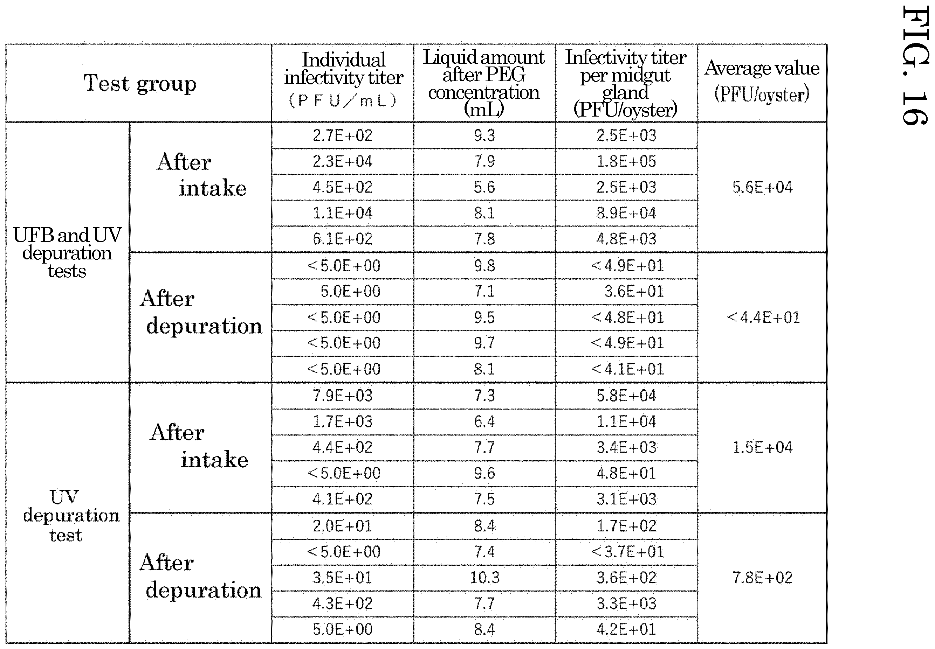

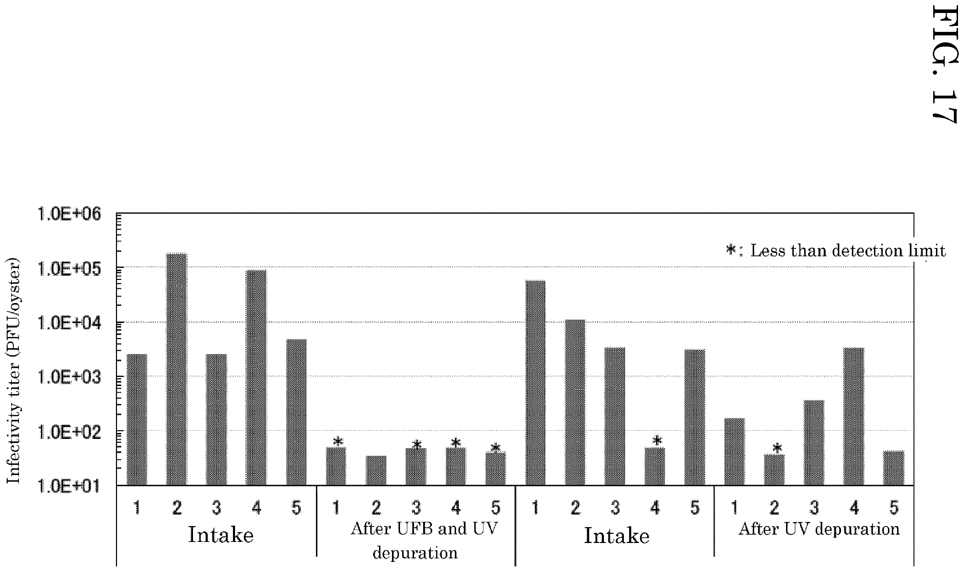

Depuration tests of oysters by UFB treatment and UV treatment were performed. The results of depuration tests of oysters are shown in Fig. 14 to Fig. 17. Fig. 14 and Fig. 15 show results of depuration tests of Pacific oysters, and Fig. 16 and Fig. 17 show results of depuration tests of rock oysters. In the determination of infectivity titer, samples of the midgut glands taken out from the oysters were prepared into a 10% emulsion with PBS, and the infectivity titer was determined.

In the same manner as the virus intake test of oysters described above, using the depuration system 10, a predetermined amount (for example, 600 L) of seawater was stored in the storage unit 12, a predetermined amount of a virus solution (750 mL) was added to the seawater and stirred to prepare test seawater T2, and submerged in the test seawater T2 to incorporate viruses in the oysters. The virus solution was prepared in the same manner as that in the purification test of seawater and the virus intake test of oysters.

Next, the seawater in the storage unit 12 was replaced, and oysters were submerged in new seawater. Then, UFB and UV depuration tests in which the oysters were subjected to UFB treatment and UV treatment at the same time for 20 hours, and UV depuration test in which the oysters were subjected only to UV treatment for 20 hours, not to UFB treatment, were performed.

Comparison results of the UFB and UV depuration tests and the UV depuration test using twenty Pacific oysters were shown in Fig. 14.

In the UFB and UV depuration tests, oysters were submerged in the test seawater T2 to infect with viruses, and the average of infectivity titers detected from the midgut glands of five Pacific oysters after virus intake was 1.2 × 10^4, whereas the average of infectivity titers of five Pacific oysters after depuration test was 4.4 × 10^1 or less. Also, the infectivity titer was less than detection limit in all five Pacific oysters after depuration test.

On the other hand, in the UV depuration test, oysters were submerged in the test seawater T2 to infect with viruses, and the average of infectivity titers detected from the midgut glands of five Pacific oysters after virus intake was 4.5 × 10^4, whereas the average of infectivity titers of five Pacific oysters after depuration test was 3.7 × 10^2. A diagram in which these results are made into a graph is shown in Fig. 15.

Comparison results of the UFB and UV depuration tests and the UV depuration test using twenty rock oysters were shown in Fig. 16. In the UFB and UV depuration tests, oysters were submerged in the test seawater T2 to infect with viruses, and the average of infectivity titers detected from the midgut glands of five rock oysters after virus intake was 5.6 × 10^4, whereas the average of infectivity titers of five rock oysters after depuration test was 4.4 × 10^1 or less. Also, the infectivity titer was less than detection limit in four out of five rock oysters after depuration test.

On the other hand, in the UV depuration test, oysters were submerged in the test seawater T2 to infect the oysters with viruses, and the average of infectivity titers detected from the midgut glands of rock oysters after virus intake was 1.5 × 10^4, whereas the average of infectivity titers of five Pacific oysters after depuration test was 7.8 × 10^2. The infectivity titer was less than detection limit in each one out of five rock oysters before UV depuration test and five rock oysters after UV depuration test. A diagram in which these results are made into a graph is shown in Fig. 17.

Based on the depuration test of oysters, in both Pacific oysters and rock oysters, in the UFB and UV depuration tests, the infectivity titer of viruses was detection limit or less in almost all samples. On the other hand, in the UV depuration test, while reduction of the infectivity titer was observed, the infectivity titer was not reduced to the detection limit or less.

Based on these results, it can be seen that the UFB and UV depuration tests have high inactivation effect as compared to the UV depuration test. Specifically, in the UFB and UV depuration tests, the infectivity titer was detection limit or less in almost all oysters. Therefore, it can be said that viruses can be depurated from oysters to an extent that the viruses do not affect a human body, by performing UFB and UV depuration.

Based on the above test results, it can be seen that superfine bubbles by UFB treatment intrude into the midgut gland of oyster and selectively adsorb and desorb viruses, and the selectively adsorbed and desorbed viruses are inactivated by ultraviolet rays by UV treatment.

It is known as a background of performing the tests that norovirus proliferates in the intestine of human body, is excreted from the human body, reaches sea area through rivers, sewage, and the like, and is accumulated in the midgut glands of bivalves such as oyster. Also, it is known that there may be a risk of causing norovirus infection when bivalves such as oyster accumulated with norovirus are eaten raw or eaten without being fully heated (heating at a center temperature of 85°C or more for 90 seconds or more).

Among bivalves, oyster that is frequently eaten raw is a main factor of cause of onset of norovirus infection. In Japan, oysters are marketed, distinguishing between for eating raw and for heating. The oysters for eating raw are shipped limiting those cultivated in a place where Escherichia coli and the like in seawater in sea area stationary observed by a public health center is a certain reference value or less, and further washed with seawater purified by ultraviolet rays for 18 hours or more. However, even oysters for eating raw are not free of norovirus, and cause norovirus infection when containing a certain level of norovirus having an infectivity titer (containing one or more digits norovirus having an infectivity titer). Therefore, depuration of norovirus from bivalves such as oyster has been a conventional problem.

In the inactivation test of viruses described above, using feline calicivirus that is designated as a surrogate for norovirus by US FDA (Food and Drug Administration) and not infected with human, the difference in effects between the inactivation treatment only by ultraviolet rays and the depuration treatment by superfine bubbles in addition to the inactivation treatment by ultraviolet rays has been demonstrated. This depuration method makes the level of norovirus having the infectivity titer that is accumulated in the midgut glands of bivalves such as oyster the detection limit or less, which has been impossible by a conventional technique.

It is a method to provide safe oysters that do not cause norovirus infection even when oysters subjected to this depuration method was eaten raw or in a rare state (not enough heated), and this technique can be said as a technique applicable not only depuration of fish and shellfish, but also washing disinfection, and depuration of meat, vegetables and root vegetables.

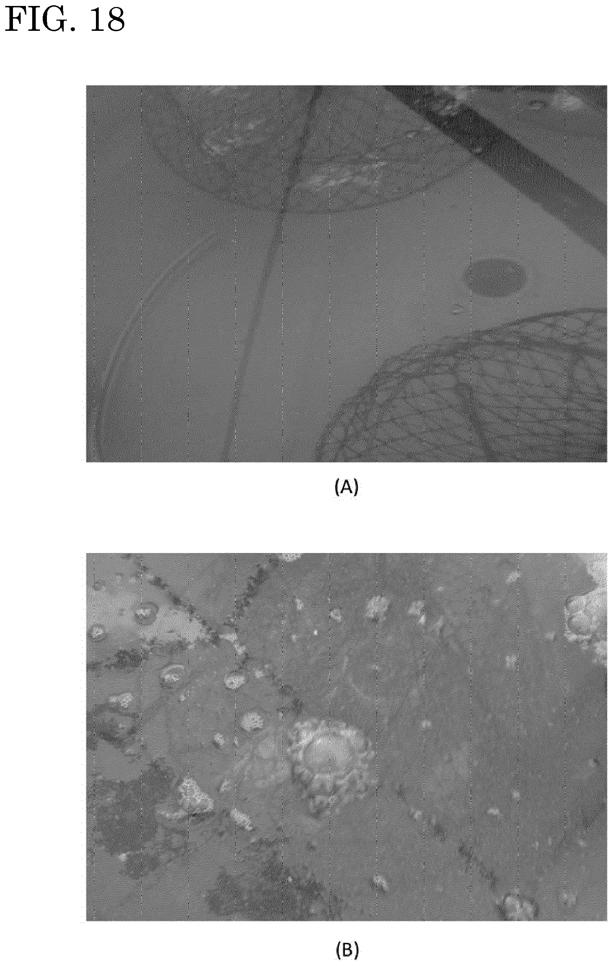

Furthermore, a test for comparing water surfaces of storage units in a case where UFB treatment is not performed and a case where UFB treatment was performed, in the storage units where oysters were retained. Figs. 18(A) and 18(B) show the test results, Fig. 18(A) shows a photograph of water surface of the storage unit in the case where the UFB treatment is not performed in the storage unit where oysters are retained, and Fig. 18(B) shows a photograph of water surface of the storage unit in the case where the UFB treatment is performed in the storage unit where oysters are retained.

While no significant floating matter exists on the water surface in the photograph of Fig. 18(A), floating matters exist on the water surface in the photograph of Fig. 18(B). It is considered that while excreta from oysters were extremely small in amount when the UFB treatment is not performed, substrates such as protein were selectively adsorbed and desorbed and excreted, then observed as floating matters when the UFB treatment is performed. Also, it is considered that viruses, germs and the like are contained in the floating matters. Whereby, selective adsorption and desorption by the UFB treatment were visually confirmed.

### [Modification Example of Depuration System]

A depuration system for shellfish according to this embodiment may include a superfine bubble generating unit between the sea area S and the storage unit 12 in a path for introducing the sea water T. In this manner, even when seawater is not circulated by the circulation path 102, seawater that is purified by irradiation with ultraviolet rays and made to contain oxygen gas bubbles can be prepared in the storage unit 12.

For example, a superfine bubble generating unit is provided between the second purification unit 23 and the storage unit 12, whereby seawater that is purified by irradiation with ultraviolet rays and made to contain oxygen gas bubbles can be prepared in the storage unit. Furthermore, the seawater thus introduced is derived from the seawater discharge pipe 126, and discharged to the sea area S, whereby the seawater that is purified by irradiation with ultraviolet rays and made to contain oxygen gas bubbles can be acted on shellfish, by so-called trickle flow.

In the depuration system 10 for shellfish according to the embodiment of the present invention, the circulation path 102 that returns again from the storage unit 12 to the storage unit 12 through the fine bubble generating unit 14 and the ultrasonic wave crushing unit 16. In addition, other circulation path that returns again from the storage unit 12 to the storage unit 12 through the ultrasonic wave crushing unit 16 without passing through the fine bubble generating unit 14 may be provided. Whether the seawater T is circulated in the circulation path 102 or other circulation path may be made switchable.

In addition, each of the fine bubble generating unit 14 and the ultrasonic wave crushing unit 16 may be separately incorporated in a circulation path that circulates the seawater T stored in the storage unit 12. At this time, each circulation path may be simultaneously circulated, or separately circulated. For example, a circulation path incorporating the fine bubble generating unit 14 may be circulated, and store the seawater T containing fine bubbles in the storage unit 12, then a circulation path incorporating the ultrasonic wave crushing unit 16 may be circulated, convert the fine bubbles contained in the seawater T into superfine bubbles, and store the seawater T containing superfine bubbles in the storage unit 12.

In the depuration system 10 for shellfish according to the embodiment of the present invention, superfine bubbles enter the body of oysters 100 and selectively adsorb and desorb viruses by submerging the oysters 100 in seawater containing superfine bubbles, whereby the viruses are discharged from the oysters 100 to seawater, that is, depurated.

Also, in the depuration system and depuration method for shellfish according to the embodiment of the present invention, the seawater intake amount of the oysters 100 is greatly improved by physiological activation due to oxygen gas bubbles. As a result, circulation of seawater sucked and discharged by the oysters 100 is quickened to increase a depuration effect on the oysters.

In addition, in the depuration method for shellfish according to the embodiment of the present invention, oxygen gas superfine bubbles preferably meet the following conditions.
Dissolved oxygen concentration of seawater: 5 ppm to 20 ppm
Bubble particle size: less than 100 nm

Particularly, in order to more effectively selectively adsorb, desorb and wash norovirus accumulated in the midgut gland, it is necessary that superfine bubbles reach inside the cecum of the midgut gland, and have a bubble particle size almost similar to that of viruses. Also, shellfish does not sufficiently activate when the dissolved oxygen concentration is below 5 ppm, whereas shellfish does not activate also when the dissolved oxygen concentration is above 20 ppm.

Moreover, other than oxygen gas, other gas having high inactivation effect like ozone gas can be also bubbled. However, shellfish shows rejection to the gas having high inactivation effect, activity of shellfish is deteriorated even at low concentration, and the shellfish may even die at high concentration.

Also, in the embodiment of the present invention, the first to third purification units purify, that is, disinfect, seawater, or the like, by irradiation with ultraviolet rays. However, the purification units may purify seawater by adding a disinfectant such as hypochlorous acid water, slightly acidic electrolytic hypochlorite water or the like at a concentration of 0.1 ppm to 0.3 ppm to the seawater. Also, the disinfectant may be 0.1 ppm to 0.3 ppm electrolytic hypochlorite water or chlorine dioxide at a concentration of 0.1 ppm to 0.3 ppm, and low concentration ozonated water having the same level of disinfection performance. Furthermore, in the case of purification by a disinfectant, the time period for storing shellfish and acting superfine bubbles thereon may be about 5 hours.

In the embodiment of the present invention, virus like norovirus accumulated in shellfish or feline calicivirus has been described as the subject of selective adsorption and desorption by superfine bubbles. However, selective adsorption and desorption can be utilized also for reddening disease and rhizoctonia disease of pearl oysters, and also can target other viruses such as iridovirus and bacteria such as Escherichia coli, salmonella, Vibrio parahaemolyticus, and Campylobacter. Also, however, considering the size of selectively adsorbed and desorbed subject, viruses are most effective in selective adsorption and desorption by superfine bubbles.

In the embodiment of the present invention, seawater has been described as the subject of purification. However, the subject of purification is not limited to seawater and may be fresh water such as ground water and tap water. Also, in the embodiment of the present invention, the cases of applying the depuration system and depuration method to oysters have been described. However, the depuration system and depuration method may be also applied to shellfish other than oysters, in addition, fish and shellfish, and the like.

Examples of specific modes of the present invention have been described by the embodiments and examples described above. However, the present invention is not limited to the embodiments and examples.

### INDUSTRIAL APPLICABILITY

The depuration method and depuration system for shellfish and the like of the present invention are industrially useful in depuration of shellfish and the like.

### DESCRIPTION OF REFERENCE SIGNS

- S: Sea area
- T: Seawater
- 10: Depuration system
- 11: Control unit
- 12: Storage unit
- 13: First purification unit
- 14: Fine bubble generating unit
- 16: Ultrasonic wave crushing unit
- 18: Pump
- 22: Valve
- 23: Second purification unit
- 28: Pump
- 32: Valve
- 33: Third purification unit
- 34: Superfine bubble
- 100: Oyster
- 100a: Midgut gland
- 102: Circulation path
- 120: Seawater introduction pipe
- 122: Recursive introduction pipe
- 124: Recursive derivation pipe
- 125: Bubble generator
- 126: Seawater discharge pipe
- 128: Net shelf

## Claims

1. A method for depurating shellfish, comprising preparing seawater that is purified and made to contain oxygen gas bubbles in a storage unit, and
bringing the seawater into contact with shellfish,
wherein the bubbles have superfine bubbles with a diameter of less than 100 nm, and
the superfine bubbles selectively adsorb and desorb viruses accumulated in the shellfish.

2. The method for depurating shellfish according to claim 1, wherein bringing the seawater into contact with shellfish comprises contact at least for 18 hours.

3. The method for depurating shellfish according to claim 1 or 2, further comprising, after purifying the seawater brought into contact with the shellfish, again bringing the seawater into contact with the shellfish.

4. The method for depurating shellfish according to claim 1 or 2, further comprising releasing the seawater brought into contact with the shellfish to sea area by trickle flow.

5. The method for depurating shellfish according to claim 4, wherein releasing the seawater to sea area comprises purifying the seawater before the release.

6. The method for depurating shellfish according to any one of claims 1 to 5, wherein the superfine bubbles are generated by irradiating the seawater with ultrasonic waves to crush the bubbles.

7. The method for depurating shellfish according to any one of claims 1 to 6, wherein preparing seawater that is purified and made to contain oxygen gas bubbles in the storage unit comprises purifying the seawater by irradiating the seawater with ultraviolet rays.

8. The method for depurating shellfish according to any one of claims 1 to 6, wherein preparing seawater that is purified and made to contain oxygen gas bubbles in the storage unit comprises purifying the seawater by adding a disinfectant into the seawater.

9. A depuration system for shellfish comprising
a purification unit for purifying seawater with ultraviolet rays,
a superfine bubble generating unit for generating oxygen gas bubbles with a diameter of less than 100 nm in the seawater, and
a storage unit for storing the seawater, that is connected to the purification unit and the superfine bubble generating unit,
wherein the storage unit retains shellfish.

10. A depuration system for shellfish comprising
a purification unit for purifying seawater with a disinfectant,
a superfine bubble generating unit for generating oxygen gas bubbles with a diameter of less than 100 nm in the seawater, and
a storage unit for storing the seawater, that is connected to the purification unit and the superfine bubble generating unit,
wherein the storage unit retains shellfish.

11. The depuration system for shellfish according to claim 9 or 10, wherein the purification unit, the superfine bubble generating unit and the storage unit are incorporated in a circulation path where the seawater circulates.
